# FASCICULE DE BREVET EUROPEEN

(11) **EP 1 960 881 B1**
(45) Date de publication et mention de la délivrance du brevet: **29.07.2009**
(21) Numéro de dépôt: 06830572.1
(22) Date de dépôt: 13.12.2006
(51) Int. Cl.: G06F 11/00, G06F 11/16, G05B 9/03, H02P 7/00, H02P 7/29, G05D 1/00

(54) **DISPOSITIF DE CONTROLE SECURISE D'ACTIONNEUR DE COMMANDE DE VOL D'AERONEFS**
EINRICHTUNG ZUM SICHEREN BETRIEB EINES FLUGSTEUERSTELLGLIEDES EINES FLUGZEUGS
DEVICE FOR SAFELY OPERATING A FLIGHT CONTROL ACTUATOR OF AN AIRCRAFT

(30) Priorité: 13.12.2005 FR 0512605
(43) Date de publication de la demande: 27.08.2008
(73) Titulaire: THALES, 92200 Neuilly sur Seine (FR)
(72) Inventeur: LE BASTARD, Jean-Claude, F-31100 Toulouse (FR); FOISNEAU, Jean, F-31300 Toulouse (FR)
(74) Mandataire: Esselin, Sophie
(86) Numéro de dépôt international: PCT/EP2006/069636
(87) Numéro de publication internationale: WO 2007/068711

(56) Documents cités:
- EP-A- 1 495 944
- EP-A1- 0 628 897
- WO-A-03/003131
- FR-A- 2 850 210
- UNITRODE INTEGRATED CIRCUITS CORPORATION (UICC): "Product & Applications Handbook 1995-96" janvier 1995 (1995-01), UNITRODE INTEGRATED CIRCUITS CORPORATION (UICC) , MERRIMACK, NH, USA , XP002402891 pages 7-69 - pages 7-74 pages 10-97 - pages 10-101

## Description

Le domaine de l'invention est celui des dispositifs de contrôle sécurisés d'actionneurs équipant des aéronefs et plus spécifiquement d'actionneurs agissant sur des commandes de vol d'hélicoptère.

Pour stabiliser et diriger son appareil, un pilote d'hélicoptère actionne manuellement des moyens de pilotage (manche cyclique, pas collectif et pédales) pour agir sur les axes de pilotage de l'hélicoptère (rotor principal ou rotor de queue). Un déplacement latéral ou longitudinal du manche cyclique permet d'agir respectivement sur l'axe latéral ou longitudinal de l'hélicoptère en modifiant l'incidence des pales du rotor principal. Le pas collectif permet d'adapter la puissance moteur aux conditions de vol en modifiant l'incidence des pales du rotor principal et permet de modifier la vitesse ascensionnelle. Les pédales permettent d'orienter le nez de l'hélicoptère en modifiant l'incidence des pales du rotor de queue. Le mouvement des moyens de pilotage est transmis aux axes de pilotage au moyen de chaînes de transmissions mécaniques qui sont constituées de différents relais mécaniques. L'ensemble constitué par un moyen de pilotage et une chaîne de transmission mécanique associée constitue une commande de vol liée à l'axe de pilotage considéré. L'extrémité de la commande de vol en contact avec le moyen de pilotage associé est appelée extrémité de sortie de la commande de vol.

Les hélicoptères sont souvent équipés d'un équipement de pilotage automatique qui agit sur les commandes de vol, sous l'autorité du pilote, en vue de remplir deux missions principales : une première mission d'assistance au pilote, et une deuxième mission de pilotage automatique.

Lorsqu'il assiste le pilote dans la conduite manuelle de son hélicoptère, l'équipement de pilotage automatique permet d'une part d'amortir les évolutions de la machine pour en faciliter le contrôle par le pilote, et d'autre part de maintenir la configuration courante de vol (attitudes latérale et longitudinale, et cap) permettant ainsi au pilote de lâcher momentanément les moyens de pilotage sans se placer dans une configuration de vol qui serait dangereuse.

Lorsqu'il est en mode de pilotage automatique, l'équipement de pilotage automatique permet d'asservir un ou plusieurs paramètres de vol (altitude, vitesse verticale, vitesse longitudinale, vitesse latérale, cap, navigation....) sur une ou plusieurs valeurs de consigne choisies préalablement par le pilote.

Pour agir sur une commande de vol, l'équipement de pilotage automatique utilise des actionneurs. Parmi ces actionneurs, on distingue des vérins appelés « vérins de trim » et des vérins appelés « vérins série ». Les « vérins de trim » sont des vérins, avec ou sans retour de force, qui possèdent une course importante couvrant l'ensemble des positions des commandes de vol mais dont la durée de réponse est relativement lente. Ils sont en général de type rotatif et sont placés en parallèle des commandes de vol.

Les « vérins série » sont des actionneurs mécaniques qui sont placés en série avec les commandes de vol, ils comportent un corps et un axe de sortie, ils sont en général du type vis sans fin / écrou et ils ont une autorité réduite et un temps de réponse court. Ils transforment une commande électrique en un mouvement de translation de leur axe de sortie par rapport à leur corps. Les « vérins série » sont dits « mécaniquement irréversibles », c'est à dire qu'ils se déforment uniquement lorsqu'une commande électrique leur est appliquée. En particulier lorsque l'équipement de pilotage automatique est hors fonctionnement, les « vérins série » sont sans effet sur la conduite de l'hélicoptère. Une position neutre d'un vérin série correspond à la position où l'extrémité libre de son axe de sortie est à mi-course.

Pour des raisons de sécurité, les vérins séries sont doublés au niveau des commandes de vol pour assurer une redondance, il en est de même pour les chaînes de calcul des vérins de trim.

La faible autorité d'un vérin série rend nécessaire un asservissement du mouvement du vérin de trim pour que le vérin série soit proche à chaque instant de sa position neutre. Un dispositif de contrôle définit la commande à transmettre au vérin de trim. En général, cette commande est de nature électrique et comporte une information sur le sens du mouvement de rotation et sur sa vitesse souhaitée. Un dispositif de contrôle comporte deux chaînes de calcul alimentées chacune par une information de position de l'axe de sortie d'un des vérins série et un circuit de mixage de consigne qui élabore une commande à partir des consignes provenant des différentes chaînes de calcul. Dans l'état de la technique, une première chaîne de calcul dite « de surveillance » délivre uniquement une consigne de sens de mouvement, une deuxième chaîne de calcul dite « de commande » fournit à la fois une consigne de sens de mouvement et une consigne de vitesse. Pour élaborer une commande primaire de mouvement, le circuit de mixage des consignes contrôle uniquement le sens de mouvement : il interdit un mouvement du vérin de trim dans un sens qui n'est pas conforme à la consigne de la chaîne de surveillance. Une telle architecture de dispositif de contrôle est suffisante pour le pilotage d'aéronefs relativement peu réactifs.

Lorsqu'une panne inopinée de la chaîne de calcul « de commande » survient, pendant une durée transitoire partant de l'instant où la panne s'est déclenchée jusqu'à l'instant où la chaîne de calcul « de surveillance » modifie la consigne de sens de mouvement du vérin, une commande erronée parvient au vérin et agit sur son mouvement. Certains modèles d'aéronef, c'est le cas de certains hélicoptères, sont très réactifs et même relativement instables, une panne de ce type sur un tel aéronef, surtout si la commande erronée a une forte amplitude, par exemple une commande de roulis à la vitesse de 30 degrés par seconde, peut se révéler dramatique pour le pilote de l'aéronef, car la durée de réaction du pilote est trop élevée pour lui permettre de compenser lui même les effets de la commande erronée pendant la durée transitoire.

Le but de l'invention est de pallier cet inconvénient. Plus précisément, il vise à proposer un dispositif de contrôle sécurisé délivrant une commande de mouvement d'un vérin de trim, élaborée et contrôlée à partir de consignes de sens et de vitesse élaborées indépendamment par deux chaînes de calcul indépendantes et comparées après une synchronisation temporelle préalable.

On connaît déjà par le document FR2850210 A1 un dispositif de contrôle sécurisé pour commander un mouvement d'actionneur comportant deux chaînes de calcul indépendantes, un circuit de mixage des consignes et un étage de puissance.

Plus précisément l'invention a pour objet un dispositif de contrôle sécurisé pour commander un mouvement d'actionneur comportant au moins deux chaînes de calcul indépendantes un circuit de mixage des consignes et un étage de puissance, chaque chaîne de calcul délivrant une consigne de sens de mouvement et une consigne de vitesse de mouvement de l'actionneur, les consignes étant transmises au circuit de mixage des consignes pour élaborer une commande primaire de mouvement d'actionneur comportant des trains d'impulsions modulées, l'étage de puissance recevant la commande primaire de mouvement et délivrant une commande de puissance de mouvement à l'actionneur, **caractérisé en ce que** le circuit de mixage des consignes compare les consignes de sens de mouvement et les consignes de vitesse de mouvement deux à deux pour élaborer la commande primaire de mouvement de l'actionneur.

Un premier avantage d'un dispositif de contrôle sécurisé selon l'invention tient dans le fait qu'il supprime la durée transitoire pendant laquelle une panne de sa chaîne « de commande » agit sur le mouvement de l'actionneur. Une démonstration de cette fonctionnalité à des autorités de certification aéronautique peut s'effectuer avantageusement au sol, sous forme d'une démonstration logicielle. De cette façon on évite de recourir à des essais en vol délicats et dangereux pour le pilote d'essai et par ailleurs extrêmement onéreux.

Le dispositif de contrôle sécurisé selon l'invention est compatible d'un fonctionnement couplé avec un étage de puissance dont l'architecture est du type « pont en H » (ou « H bridge » en anglais) qui est connue dans l'état de la technique pour générer une commande de puissance à partir d'une commande primaire basse tension. Cette compatibilité facilite une intégration à coût réduit d'un dispositif de contrôle sécurisé selon l'invention sur un grand nombre de type d'aéronefs existant équipé de tels étages de puissance.

Par ailleurs, l'architecture matérielle d'un dispositif de contrôle sécurisé selon l'invention est voisine de celle des dispositifs de l'état de la technique. Elle s'en distingue principalement par l'ajout d'un dispositif d'échange entre les chaînes de calcul pour la synchronisation des consignes de vitesse délivrées au circuit de mixage des consignes. Le dispositif d'échange a une masse très réduite. Le dispositif de contrôle sécurisé selon l'invention ne pénalise pas le bilan de masse d'un l'aéronef qu'il équipe.

D'autres caractéristiques et avantages de l'invention apparaîtront à la lecture de la description détaillée qui suit, faite à titre d'exemple non limitatif et en référence aux dessins annexés dans lesquels :
- la figure 1 représente partiellement une cabine de pilotage d'hélicoptère ;
- la figure 2 représente schématiquement un dispositif de contrôle selon l'art antérieur pour commander un mouvement de vérin ;
- la figure 3 représente un diagramme temporel de signaux de commande d'un dispositif de contrôle selon l'art antérieur ;
- la figure 4 représente schématiquement un dispositif de contrôle selon l'invention pour commander un mouvement de vérin ;

D'une figure à l'autre, les mêmes éléments sont repérés par les mêmes références.

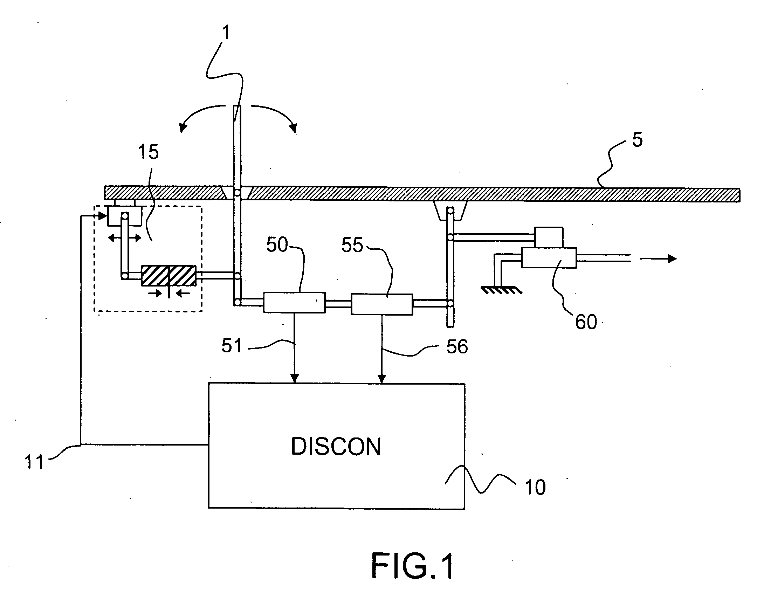

La figure 1 représente une vue de coupe partielle d'une cabine de pilotage d'un hélicoptère. Une commande de vol relie mécaniquement des moyens manuels de pilotage, par exemple un palonnier ou ici, un manche cyclique 1, placés dans une cabine de pilotage de l'hélicoptère à un des axes de pilotages de l'hélicoptère, par exemple un élément de contrôle de l'incidence des pales d'un rotor de l'hélicoptère. Le manche cyclique peut être actionné par un pilote de l'hélicoptère. Le pilote de l'hélicoptère et l'axe de pilotage ne sont pas représentés sur la figure.

Lorsqu'un pilote incline le manche cyclique 1, un mouvement suivant une dimension est transmis à la commande vol. Le mouvement de la commande de vol est transmis à un servo-moteur 60, qui assigne un mouvement proportionnel aux éléments de contrôle de l'incidence des pales de l'hélicoptère.

Un vérin de trim 15 est généralement ancré au plancher 5, à la jonction du manche cyclique et des timoneries des commandes de vol. Le vérin de trim 15 est en général du type rotatif et est monté au niveau d'articulations mécaniques, il déplace un point d'ancrage du retour d'effort sur le manche cyclique 1, et il détermine ainsi une position neutre pour le manche cyclique 1 proche, à tout instant de celle dans laquelle il a été placé par le pilote afin d'éviter toute variation brutale des commandes destinées aux axes de pilotage. L'action du vérin de trim 15 produit un mouvement de la commande de vol du même type que celui imprimé par le manche cyclique.

Le mouvement du vérin de trim est commandé par un dispositif de contrôle DISCON 10, qui lui envoie une commande électrique 11 de mouvement. La commande de mouvement 11 d'un vérin de trim 15 est élaborée par le dispositif de contrôle DISCON, par exemple à partir de mesures d'allongement des vérins séries 50, 55, qui sont placés en série sur la commande de vol.

En régime permanent, les vérins séries 50, 55 sont en position neutre. Ils quittent cette position chaque fois que le dispositif de pilotage automatique commande un changement de position significatif et rapide. Les vérins séries permettent au dispositif de pilotage automatique d'obtenir les positions voulues pour la commande de vol avant que les vérins de trim 15 n'aient atteint leurs positions de consigne. Après obtention par la commande de vol de la position voulue, les vérins série associés 50, 55, ayant quitté leur position neutre, y reviennent au fur et à mesure que le vérin de trim 15 atteint sa position de consigne.

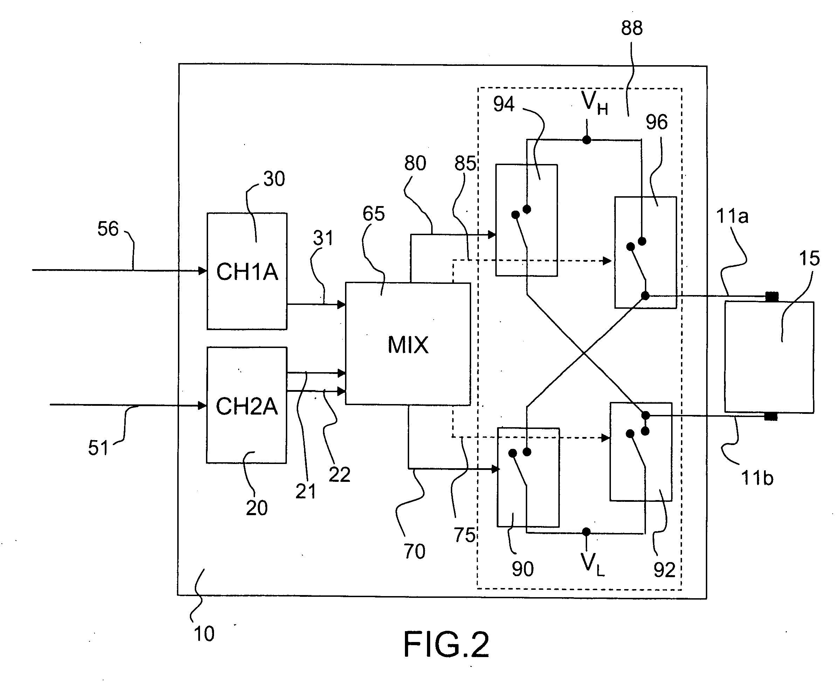

La figure 2 détaille le contenu d'un dispositif de contrôle DISCON 10 selon l'art de la technique élaborant des commandes de mouvement pour un vérin de trim 15. Le vérin de trim peut être en mouvement suivant une dimension (et donc deux sens opposés) ou peut rester immobile. Le vérin de trim est alimenté par des impulsions de tension d'amplitude V_{H}-V_{L} ou V_{L}-V_{H} délivrées par un étage de puissance.

Le dispositif de contrôle 10 comporte :
- deux chaînes de calcul CH1A, 30, CH2A 20 ;
- un circuit de mixage des consignes MIXCOMA, 65 ;
- un étage de puissance.

Dans ce qui suit, les discrets sont des booléens à deux états, par exemple des niveaux TTL :
- un état haut correspondant à une activation du discret ;
- un état bas correspondant à une désactivation du discret.

Une première chaîne de calcul CH1A 30, dite « chaîne de surveillance » reçoit une mesure 56 d'allongement d'un vérin série 50, et élabore une première consigne de sens de mouvement, 31 pour le vérin de trim 15. La chaîne CH1A active un discret WAY1#1 si un premier sens de mouvement est demandé et désactive ce discret si le premier sens n'est pas souhaité. Parallèlement, la chaîne CH1A active un discret WAY2#1 si un deuxième sens de mouvement est demandé et désactive ce discret si le deuxième sens n'est pas souhaité.

Une deuxième chaîne de calcul CH2A, 20 dite « chaîne de commande » reçoit une mesure 51 d'allongement de vérin série 55, et élabore une deuxième consigne de sens de mouvement 21, et une consigne de vitesse de mouvement 22 pour le vérin de trim 15. La chaîne CH2A active un discret WAY1#2 si le premier sens de mouvement est demandé et désactive ce discret dans le cas contraire. Parallèlement, la chaîne CH2A active un discret WAY2#2 si le deuxième sens de mouvement est demandé et désactive ce discret si le deuxième sens n'est pas souhaité.

La consigne de vitesse de mouvement délivrée par chaîne CH2A pour animer le vérin de trim prend la forme de deux discrets SPEED1#2, SPEED2#2 assignant respectivement une vitesse de mouvement du vérin 15, dans le premier sens et une vitesse de mouvement du vérin dans le deuxième sens. Le discret SPEED1#2 est désactivé si WAY1#2 est désactivé et le discret SPEED2#2 est désactivé si WAY2#2 est désactivé.

La chaîne de calcul CH2A comporte un algorithme de calcul pour calculer, en fonction de la vitesse du mouvement recherchée, la forme temporelle d'un train d'impulsions modulé en fonction de la vitesse désirée. L'algorithme détermine en particulier :
- une durée tp pendant laquelle l'une des consignes SPEED1#2 ou SPEED1#2 est au niveau haut. tₚ correspond à la durée d'un mouvement du vérin respectivement dans le premier sens ou dans le deuxième sens, à une vitesse préfixée, et
- une période Tp d'impulsions SPEED1#2 et SPEED1#2.

Les chaînes de calcul CH1A et CH2A élaborent les consignes 31, 21 et 22 indépendamment l'une de l'autre.

Le circuit de mixage des consignes MIX 65, détermine à partir des consignes délivrées par les chaînes de calcul CH1A et CH1 B une commande primaire de mouvement du vérin qui est transmise à l'étage de puissance sous la forme de quatre discrets HW_WAY1, HW_WAY2, HW_SPEED1, HW_SPEED2. Les relations liant les consignes et la commande primaire de mouvement sont explicitées ci-dessous. L'opérateur « ET » correspond à un « ET » logique.
HW_WAY1 = WAY1#2,
HW_WAY2 = WAY2#2,
HW_SPEED1 = SPEED1#2 ET WAY1#1
HW_SPEED2 = SPEED2#2 ET WAY2#1

L'étage de puissance 88 possède par exemple une architecture du type « pont en H », il comporte quatre relais 90, 92, 94, 96 ;et deux sources de tension V_{H} et V_{L} avec V_{L} < V_{H}. Chacun des discrets 70, 75, 80, 85 adresse un des quatre relais 90, 92, 94, 96 de l'étage de puissance 88 : le discret HW_SPEED1, 70 adresse un relais 90, le discret HW_SPEED2, 75 adresse un relais 92, le discret HW_WAY1, 80 adresse un relais 94, le discret HW_WAY2, 85 adresse un relais 96.. Les relais sont « passants » lorsque le discret qui les adresse est activé et « bloquants » lorsque ce discret est désactivé. Une commande en puissance 11 a, 11 b est générée par l'étage de puissance et est envoyée sur le vérin de trim 15.

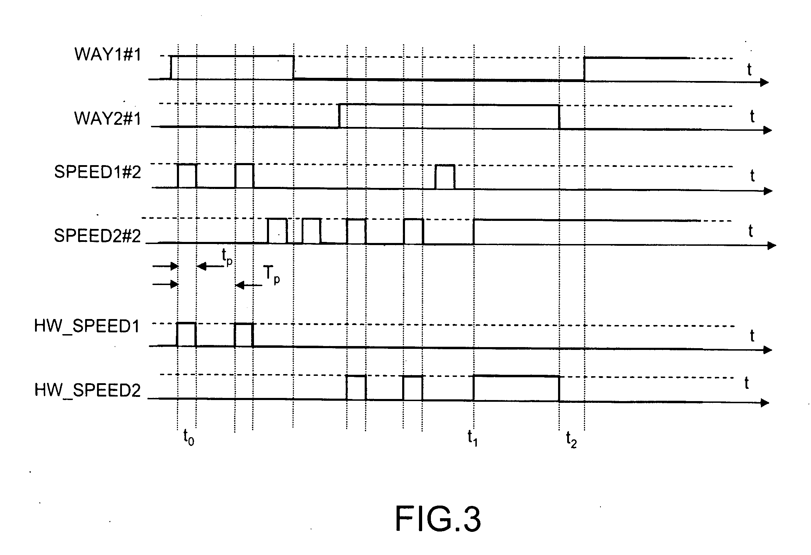

La figure 3 présente des chronogrammes qui illustrent la logique de fonctionnement du dispositif de contrôle de l'état de la technique ainsi qu'une de ses limites de fonctionnement.

Sur un premier et un deuxième chronogramme, on trace une évolution temporelle des valeurs prises par des discrets WAY1#1 et WAY2#1.

Sur un troisième et un quatrième chronogramme, on trace une évolution temporelle des valeurs prises par les discrets SPEED1#2 et SPEED2#2.

Enfin sur un cinquième et sixième chronogramme, on trace une évolution temporelle des valeurs prises par des discrets HW_SPEED1#2 et HW_SPEED2#2.

A partir d'un instant t₀ jusqu'à un instant t₁, les discrets HW_SPEED1 et HW_SPEED2 constituant la commande primaire de mouvement sont conformes aux consignes de mouvement.

Lorsque à l'instant t₁, une panne survient sur la chaîne de calcul CHA2, par exemple le discret SPEED2#2 se bloque, de façon inopinée au niveau haut, le vérin de trim 15, s'anime d'un mouvement continu jusqu'à t2. t2 l'instant où la chaîne CHA2 désactive le discret WAY1#2. Plus la durée transitoire séparant l'instant t₂ de l'instant t₁ est longue et plus les conséquences de la panne peuvent se révéler graves pour le pilote et son appareil, notamment dans la situation où le vérin concerné est associé à une commande de vol agit sur le roulis de l'hélicoptère.

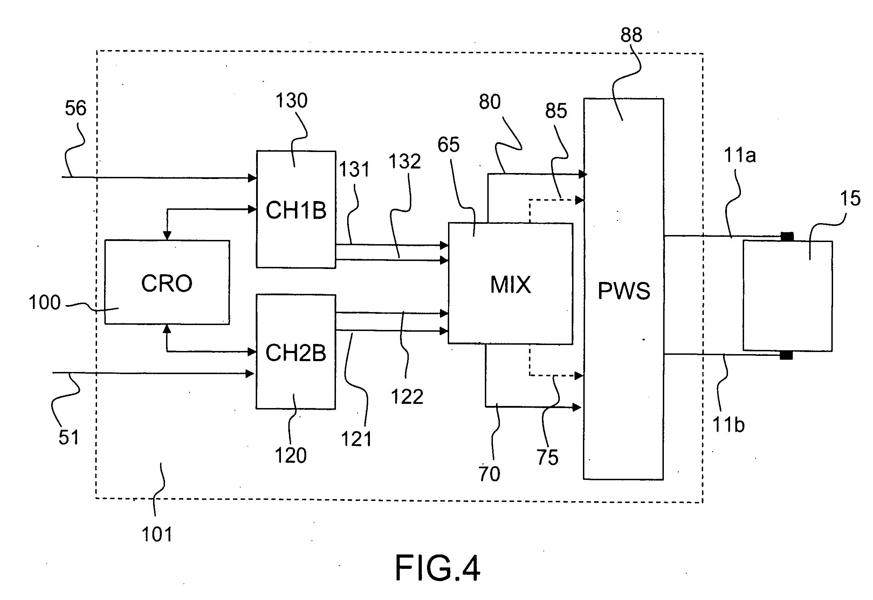

La figure 4 représente un dispositif de contrôle selon l'invention qui réduit l'effet d'une panne telle que décrite précédemment sur la figure 3. Le dispositif de contrôle sécurisé selon l'invention 101, comporte :
- deux chaînes de calcul CH1B, 130, CH2B 120 ;
- un circuit de mixage des consignes MIX, 65 ;
- un étage de puissance, PWS, 88 ;
- un circuit de dialogue inter-chaîne CRO, 100.

Chaque chaîne de calcul CH1 B, CH2B, 120, 130 élabore une consigne de sens de mouvement 121, 131 et une consigne de vitesse de mouvement 122, 132 indépendamment de l'autre chaîne de calcul à partir par exemple d'information 51, 56 provenant de l'allongement des vérins série 50,55.

Avantageusement, le dispositif de contrôle sécurisé selon l'invention 101 comporte, en outre, un module d'échange, 100 pour échanger des informations entre les chaînes de calcul 120, 130 et en ce que les informations permettent une synchronisation temporelle des consignes de vitesse avant qu'elles soient délivrées au circuit de mixage des consignes, 65.

Des informations sont échangées par les chaînes de calcul CH1B, CH2B, par exemple des acquittements de fin d'élaboration des consignes 121, 131, 122, 132. Chaque chaîne de calcul CH1B, CH2B est alimentée par des informations 51, 56 qui lui sont propres, et fonctionne à une cadence qui lui est propre. Un exemple de synchronisation temporelle consiste en un démarrage d'émission des consignes vers le circuit de mixage des consignes à la condition que chacune des chaînes CH1B, CH2B ait fini d'élaborer ses consignes 121, 131, 122, 132, chaque consigne 121, 131, 122, 132 prenant la forme de deux discrets. Ainsi, la chaîne de calcul CH1B délivre quatre discrets : WAY1#1, WAY2#1, SPEED1#1, SPEED2#1, et la chaîne de calcul CH2B délivre quatre discrets : WAY1#2, WAY2#2, SPEED1#2, SPEED2#2.

Lorsqu'il reçoit les consignes 121, 131, 122, 132 provenant des chaînes de calcul CH1B, CH2B, préalablement synchronisées, le circuit de mixage des consignes MIX, 65 élabore une commande primaire de mouvement 70, 75, 80, 85

Les relations liant les consignes de mouvement et les constituants de la commande primaire de mouvement 70, 75, 80, 85 sont explicitées ci-dessous. L'opérateur « ET » correspond à un « ET » logique.
HW_WAY1 = WAY1#2,
HW_WAY2 = WAY2#2,
HW_SPEED1 = SPEED1#2 ET SPEED1#1
HW_SPEED2 = SPEED2#2 ET SPEED2#1

L'étage de puissance PWS, 88 possédant par exemple une architecture du type « pont en H » délivre la commande de puissance 11 a, 11 b lorsqu'il est alimenté par une commande primaire de mouvement 70, 75, 80, 85 qui est peut être transmise dans ce cas sous la forme de quatre discrets HW_WAY1, HW_WAY2, HW_SPEED1, HW_SPEED2 adressant chacun, l'un des quatre relais de l'étage de puissance 88.

Avantageusement, l'étage de puissance 88 comporte un pont de puissance en H, et deux sources de tension délivrant des tensions différentes, le pont de puissance en H comprenant quatre relais 90, 92, 94, 96, adressables individuellement par des discrets, l'ensemble des discrets constituant la commande primaire 70, 75, 80, 85, un relais pouvant être passant ou bloquant en fonction de la valeur du discret qui l'adresse.

Le vérin de trim 15, est mis en mouvement à la réception d'une commande de puissance de mouvement 11 a, 11 b à ses bornes.

Un résultat de cette méthode de calcul est que :

Avantageusement, lorsque au moins deux consignes de sens de mouvement 121, 131 différentes alimentent le circuit de mixage des consignes 65, la commande primaire 70, 75, 80, 85, que le circuit délivre à l'étage de puissance 88 correspond à un mouvement nul,

Avantageusement, lorsque au moins deux consignes de vitesse de mouvement 122, 132 alimentant le circuit de mixage des consignes 65, sont différentes, la commande primaire 70, 75, 80, 85, que le circuit de mixage des consignes (65), délivre à l'étage de puissance 88 correspond à un mouvement dont la vitesse est la plus faible de celles assignées par les consignes de vitesse 122, 132.

De cette façon, on limite les effets d'une défaillance inopinée d'une des deux chaînes de calcul CH1 B, CH2B.

Avantageusement, l'actionneur 15, est un vérin de pleine autorité de type rotatif.

Avantageusement, l'actionneur 15, est un vérin de trim qui est employé pour agir sur des moyens manuels de pilotage 1, d'un aéronef.

Les moyens manuels de pilotage sont par exemple un palonnier ou un manche cyclique.

## Revendications

1. Dispositif de contrôle sécurisé pour commander un mouvement d'actionneur (15) comportant au moins deux chaînes de calcul indépendantes (120), (130), un circuit de mixage des consignes (65) et un étage de puissance (88), chaque chaîne de calcul délivrant une consigne de sens de mouvement et une consigne de vitesse de mouvement de l'actionneur (15), les consignes étant transmises au circuit de mixage des consignes (65) pour élaborer une commande primaire de mouvement d'actionneur comportant des trains d'impulsions modulées, l'étage de puissance recevant la commande primaire de mouvement et délivrant une commande de puissance de mouvement à l'actionneur (15), le circuit de mixage des consignes (65) opérant une combinaison logique des consignes de sens de mouvement et des consignes de vitesse de mouvement pour élaborer la commande primaire de mouvement (70,75,80,85) de l'actionneur (15), **caractérisé en ce qu'**il comporte, en outre, un module d'échange (100) pour échanger des informations entre les chaînes de calcul (120), (130) et **en ce que** les informations permettent une synchronisation temporelle des consignes de vitesse (122), (132) avant qu'elles soient délivrées au circuit de mixage des consignes (65),
et **en ce que** les consignes de mouvement et de vitesse et la commande primaire de mouvement (70,75,80,85), transmise sous la forme de quatre discrets HW_WAY1, HW_WAY2, HW_SPEED1, HW_SPEED2, sont liées par les relations suivantes :
HW_WAY1 = WAY1#2,
HW_WAY2 = WAY2#2,
HW_SPEED1 = SPEED1#2 ET SPEED1#1,
HW_SPEED2 = SPEED2#2 ET SPEED2#1,
un discret étant un booléen à deux états, WAY1#2 étant un discret activé par une deuxième chaîne de calcul pour délivrer une consigne de sens de mouvement dans un premier sens, WAY2#2, étant un discret activé par la deuxième chaîne de calcul pour délivrer une consigne de sens de mouvement dans un deuxième sens, SPEED1#2 étant un discret activé par la deuxième chaîne de calcul pour assigner une vitesse de mouvement de l'actionneur dans le premier sens, le discret SPEED1#2 étant désactivé si WAY1#2 est désactivé, SPEED1#1 étant un discret activé par la première chaîne de calcul pour assigner une vitesse de mouvement de l'actionneur dans le premier sens, SPEED2#2 étant un discret activé par la deuxième chaîne de calcul pour délivrer une vitesse de mouvement de l'actionneur dans le deuxième sens, le discret SPEED2#2 étant désactivé si WAY2#2 est désactivé, SPEED2#1 étant un discret activé par la première chaîne de calcul pour assigner une vitesse de mouvement de l'actionneur dans le deuxième sens, l'opérateur ET correspondant à un ET logique.

2. Dispositif de contrôle sécurisé selon la revendication 1, **caractérisé en ce que** l'étage de puissance (88) comporte un pont de puissance en H, et deux sources de tension délivrant des tensions différentes, le pont de puissance en H comprenant quatre relais (90), (92), (94), (96), adressables individuellement par des discrets, l'ensemble des discrets constituant la commande primaire (70), (75), (80), (85), un relais pouvant être passant ou bloquant en fonction de la valeur du discret qui l'adresse.

3. Dispositif de contrôle sécurisé selon l'une des revendications 1 ou 2 **caractérisé en ce que** l'actionneur (15) est un vérin de pleine autorité de type rotatif.

4. Dispositif de contrôle sécurisé selon l'une des revendications 1 à 3 **caractérisé en ce que** l'actionneur (15) est un vérin de trim qui est employé pour agir sur des moyens manuels de pilotage d'un aéronef.

## Claims

1. Safe control device for commanding an actuator (15) movement comprising at least two independent calculation chains (120), (130), a circuit for mixing instructions (65) and a power stage (88), each calculation chain delivering a direction of movement instruction and a speed of movement instruction for the actuator (15), the instructions being transmitted to the circuit for mixing instructions (65) in order to generate a primary actuator movement command comprising modulated pulse trains, the power stage receiving the primary movement command and delivering a power movement command to the actuator (15), the circuit for mixing instructions (65) effecting a logical combination of the direction of movement instructions and of the speed of movement instructions in order to generate the primary movement command (70, 75, 80, 85) of the actuator (15), **characterized in that** it furthermore comprises an exchange module (100) for exchanging information between the calculation chains (120), (130) and **in that** the information allows a temporal synchronization of the speed instructions (122), (132) before they are delivered to the circuit for mixing instructions (65),
and **in that** the movement and speed instructions and the primary movement command (70, 75, 80, 85), transmitted in the form of four discretes HW_WAY1, HW_WAY2, HW_SPEED1, HW_SPEED2, are linked by the following relations:
HW_WAY1 = WAY1#2,
HW_WAY2 = WAY2#2,
HW_SPEED1 = SPEED1#2 AND SPEED1#1,
HW_SPEED2 = SPEED2#2 AND SPEED2#1,
a discrete being a two-state Boolean, WAY1#2 being a discrete activated by second calculation chain for delivering an instruction regarding direction of movement in a first direction, WAY2#2 being a discrete activated by the second calculation chain for delivering an instruction regarding direction of movement in a second direction, SPEED1#2 being a discrete activated by the second calculation chain for assigning a speed of movement of the actuator in the first direction, the discrete SPEED1#2 being deactivated if WAY1#2 is deactivated, SPEED1#1 being a discrete activated by the first calculation chain for assigning a speed of movement of the actuator in the first direction, SPEED2#2 being a discrete activated by the second calculation chain for delivering a speed of movement of the actuator in the second direction, the discrete SPEED2#2 being deactivated if WAY2#2 is deactivated, SPEED2#1 being a discrete activated by the first calculation chain for assigning a speed of movement of the actuator in the second direction, and the operator AND corresponding to a logical AND.

2. Safe control device according to Claim 1, **characterized in that** the power stage (88) comprises a power H bridge and two voltage sources supplying different voltages, the power H bridge comprising four relays (90), (92), (94), (96), individually addressable by discrete values, the set of discrete values constituting the primary command (70), (75), (80), (85), a relay being able to be conducting or nonconducting depending on the value of the discrete value addressing it.

3. Safe control device according to either of Claims 1 and 2, **characterized in that** the actuator (15) is a full authority rotary type jack.

4. Safe control device according to one of Claims 1 to 3, **characterized in that** the actuator (15) is a trim jack which is used for acting on the manual piloting means of an aircraft.

## Patentansprüche

1. Gesicherte Überwachungsvorrichtung zur Steuerung einer Stellgliedbewegung (15), die mindestens zwei unabhängige Rechenketten (120), (130), eine Sollwert-Mischschaltung (65) und eine Leistungsstufe (88) aufweist, wobei jede Rechenkette einen Sollwert der Bewegungsrichtung und einen Sollwert der Bewegungsgeschwindigkeit des Stellglieds (15) liefert, wobei die Sollwerte an die Sollwert-Mischschaltung (65) übertragen werden, um eine primäre Steuerung der Stellgliedbewegung zu erarbeiten, die modulierte Impulsfolgen aufweist, wobei die Leistungsstufe die primäre Bewegungssteuerung empfängt und eine Bewegungsleistungssteuerung an den Stellglied (15) liefert, wobei die Sollwert-Mischschaltung (65) eine logische Kombination der Sollwerte der Bewegungsrichtung und der Sollwerte der Bewegungsgeschwindigkeit durchführt, um die primäre Bewegungssteuerung (70, 75, 80, 85) des Stellglieds (15) zu erarbeiten, **dadurch gekennzeichnet, dass** sie außerdem ein Austauschmodul (100) aufweist, um Informationen zwischen den Rechenketten (120), (130) auszutauschen, und dass die Informationen eine zeitliche Synchronisation der Geschwindigkeitssollwerte (122), (132) erlauben, ehe sie an die Sollwert-Mischschaltung (65) geliefert werden,
und dass die Bewegungs- und Geschwindigkeitssollwerte und die primäre Bewegungssteuerung (70, 75, 80, 85), die in Form von vier diskreten Werten HW_WAY1, HW_WAY2, HW_SPEED1, HW_SPEED2 übertragen wird, durch die folgenden Beziehungen verbunden sind:
HW_WAY1 = WAY1#2,
HW_WAY2 = WAY2#2,
HW_SPEED1 = SPEED1#2 UND SPEED1#1,
HW_SPEED2 = SPEED2#2 UND SPEED2#1,
wobei ein diskreter Wert ein Boolean mit zwei Zuständen ist, wobei WAY1#2 ein diskreter Wert ist, der von einer zweiten Rechenkette aktiviert wird, um einen Bewegungsrichtung-Sollwert in einer ersten Richtung zu liefern, wobei WAY2#2 ein diskreter Wert ist, der von einer zweiten Rechenkette aktiviert wird, un einen Bewegungsrichtung-Sollwert in einer zweiten Richtung zu liefern, wobei SPEED1#2 ein diskreter Wert ist, der von der zweiten Rechenkette aktiviert wird, um eine Bewegungsgeschwindigkeit des Stellglieds in der ersten Richtung zuzuweisen, wobei der diskrete Wert SPEED1#2 deaktiviert ist, wenn WAY1#2 deaktiviert ist, wobei SPEED1#1 ein diskreter Wert ist, der von der ersten Rechenkette aktiviert wird, um eine Bewegungsgeschwindigkeit des Stellglieds in der ersten Richtung zuzuweisen, wobei SPEED2#2 ein diskreter Wert ist, der von der zweiten Rechenkette aktiviert wird, um eine Bewegungsgeschwindigkeit des Stellglieds in der zweiten Richtung zu liefern, wobei der diskrete Wert SPEED2#2 deaktiviert ist, wenn WAY2#2 deaktiviert ist, wobei SPEED2#1 ein diskreter Wert ist, der von der ersten Rechenkette aktiviert wird, um eine Bewegungsgeschwindigkeit des Stellglieds in der zweiten Richtung zuzuweisen, wobei der UND-Operator einem logischen UND entspricht.

2. Gesicherte Überwachungsvorrichtung nach Anspruch 1, **dadurch gekennzeichnet, dass** die Leistungsstufe (88) eine H-Leistungsbrücke und zwei Spannungsquellen aufweist, die unterschiedliche Spannungen liefern, wobei die H-Leistungsbrücke vier Relais (90), (92), (94), (96) aufweist, die individuell von den diskreten Werten angesteuert werden können, wobei die Einheit der diskreten Werte die primäre Steuerung (70), (75), (80), (85) bildet, wobei ein Relais in Abhängigkeit vom Wert des es ansteuernden diskreten Werts leitend oder sperrend sein kann.

3. Gesicherte Überwachungsvorrichtung nach einem der Ansprüche 1 oder 2, **dadurch gekennzeichnet, dass** das Stellglied (15) ein vollberechtigter Drehzylinder ist.

4. Gesicherte Überwachungsvorrichtung nach einem der Ansprüche 1 bis 3, **dadurch gekennzeichnet, dass** das Stellglied (15) ein Trimmzylinder ist, der verwendet wird, um auf manuelle Steuermittel eines Luftfahrzeugs einzuwirken.
